# FASCICULE DE BREVET EUROPEEN

(11) **EP 1 161 168 B1**
(45) Date de publication et mention de la délivrance du brevet: **18.06.2003**
(21) Numéro de dépôt: 00910968.7
(22) Date de dépôt: 16.03.2000
(51) Int. Cl.: A47J 37/06, A47J 36/10

(54) **APPAREIL ELECTRIQUE DU TYPE GAUFRIER A OUVERTURE AUTOMATIQUE**
ELEKTRISCHES GERÄT DES TYPS WAFFELEISEN MIT AUTOMATISCHER ÖFFNUNG
ELECTRICAL APPLIANCE SUCH AS A WAFFLE IRON WITH AUTOMATIC OPENING

(30) Priorité: 17.03.1999 FR 9903325
(43) Date de publication de la demande: 12.12.2001
(73) Titulaire: SEB S.A., 69130 Ecully (FR)
(72) Inventeur: PATENOTRE, Yves, F-74270 Desingy (FR)
(74) Mandataire: Somnier, Jean-Louis
(86) Numéro de dépôt international: FR0000645
(87) Numéro de publication internationale: WO00054640

(56) Documents cités:
- EP-A- 0 787 453
- DE-A- 2 734 246
- US-A- 1 952 763

## Description

La présente invention concerne un appareil électrique du type gaufrier, comportant un corps comprenant deux plaques de cuisson articulées entre une position d'écartement et une position de rapprochement permettant la superposition des deux plaques entre lesquelles s'opère la cuisson de l'aliment.

Par « plaques de cuisson », on entendra ici plus généralement les parties supérieure et inférieure de l'appareil dans leur ensemble, autrement dit les deux moitiés du corps se superposant, plutôt que les plaques de cuisson proprement dites, distinctes du capot qui les recouvre et de la résistance qui les chauffe.

Chacune des deux plaques comporte en effet une résistance chauffante protégée par un capot extérieur et une paroi intérieure dont la surface venant en contact avec l'aliment à cuire est conformée en fonction de ce dernier.

Par « appareil du type gaufrier » on entendra tout appareil du type précité, dont la paroi intérieure des plaques permet de faire des gaufres et/ou des croque-monsieur et/ou de griller les deux faces d'une pièce de viande. Des appareils offrant ces trois possibilités sont connus sous le nom de croque-gaufre-gril.

La durée de cuisson dans ces appareils électriques est généralement subordonnée à l'appréciation de l'utilisateur, qui doit intervenir manuellement pour ouvrir l'appareil lorsqu'il estime que l'aliment est cuit.

L'ouverture manuelle peut comporter des risques de brulûre, et la cuisson de l'aliment est tributaire de l'expérience de l'utilisateur et de sa disponibilité au moment requis.

On connaît par le document DE 27 34 246 un appareil comportant deux plaques superposées pour une cuisson simultanée des deux côtés de l'aliment. Un dispositif de verrouillage associé à une minuterie déclenche l'ouverture automatique de l'appareil dont la plaque supérieure comporte des moyens de rappel en position d'ouverture. Les moyens de verrouillage consistent en une tige mobile en translation le long d'un manche de poignée s'étendant à l'extérieur du corps de l'appareil, la tige venant en prise avec un bord extérieur du corps de l'appareil et reculant, sous l'action d'un taquet de minuterie, à l'encontre d'un ressort de rappel pour libérer ce bord et déclencher l'ouverture.

Ce dispositif d'ouverture automatique rend l'appareil encombrant et peu maniable .

Le document US 1 952 763 divulgue un appareil à ouverture automatique plus compact que le précédent, comportant un crochet pivotant entre une position dans laquelle il est en prise avec un organe en saillie sur une surface extérieure du corps de l'appareil et une position dans laquelle il est libéré par un levier de minuterie. Dans cet appareil, le bon fonctionnement des moyens de verrouillage, tant pour la fermeture que pour l'ouverture, apparaît tributaire de la complémentarité de formes des organes de verrouillage coopérant sans encliquetage, ainsi que d'un frottement possible du crochet pivotant sur le corps de l'appareil.

L'invention a ainsi pour but d'automatiser la durée de cuisson et l'ouverture d'un appareil du type précité, par un système compact et fiable.

L'appareil visé comporte, de manière connue,
- deux plaques de cuisson reliées par une charnière permettant leur articulation entre une position d'écartement et une position de rapprochement permettant la superposition des deux plaques entre lesquelles s'opère la cuisson de l'aliment ;
- des moyens de rappel de la plaque supérieure en position d'écartement ;
- des moyens de verrouillage intégrés au corps de l'appareil, comprenant un verrou mécanique qui est muni d'un ressort de rappel, qui a la forme d'un crochet à une de ses extrémités, et qui pivote autour d'un axe entre une position dans laquelle il est en prise et verrouille l'appareil en position de superposition des deux plaques, et une position dans laquelle il est libéré ; et
- un organe déclencheur mécanique ou électromagnétique, solidaire d'une minuterie ou commandé par elle, adapté à mettre le verrou dans sa position libérée et à déclencher l'ouverture automatique de l'appareil.

L'appareil selon l'invention est caractérisé en ce que l'axe de pivotement du verrou est parallèle au bord ou à la paroi interne du corps de l'appareil avec laquelle le crochet est adapté à venir en prise, le ressort de rappel étant disposé à l'extrémité du verrou opposée à celle où est situé le crochet.

La combinaison desdits moyens de rappel, des moyens de verrouillage et de la minuterie permet d'associer le temps de fermeture de l'appareil au temps de cuisson de l'aliment, de sorte que la minuterie peut commander l'ouverture de l'appareil sans nécessairement commander l'alimentation électrique des résistances chauffantes.

Sous l'effet des moyens de rappel, l'ouverture est suffisante pour abaisser sensiblement la température de cuisson et, avantageusement, la plaque supérieure se relève suffisamment pour permettre à l'utilisateur de retirer l'aliment cuit sans contact avec les plaques de cuisson.

L'intégration des moyens de verrouillage au corps de l'appareil, rendue possible par la conception d'un verrou pivotant venant en prise avec une paroi interne parallèle à l'axe de pivotement du verrou, se traduit par un appareil compact, dont le bon fonctionnement à l'ouverture et à la fermeture n'est pas susceptible d'être entravé par un élément extérieur.

D'autres particularités et avantages de l'invention apparaîtront dans la description qui suit, de divers modes de réalisation donnés à titre d'exemples non limitatifs.

Aux dessins annexés,
- les figures 1 et 2 sont des vues en perspective d'un dispositif de verrouillage mécanique, déclenché mécaniquement, conformément à un premier mode de réalisation de l'invention ;
- la figure 3 est une vue en coupe longitudinale avec arrachement d'une extrémité d'un appareil électrique incorporant le dispositif des figures 1 et 2 ;
- la figure 4 est une vue en perspective latérale d'un appareil électrique du type de celui de la figure 3, montrant les moyens d'écartement automatique de la plaque supérieure intégrés à la charnière de l'appareil ;
- la figure 5 est une vue schématique en coupe avec arrachement d'une extrémité d'un appareil électrique incorporant un dispositif à verrou mécanique et vérin électromagnétique, conformément à un second mode de réalisation de l'invention ;
- la figure 6 est une vue analogue à la figure 3 montrant une variante de l'invention.

L'appareil électrique du type gaufrier comprend un corps 1 comportant deux plaques de cuisson 10, 11 proprement dites, chauffées chacune par une résistance (non représentée) et recouverte d'un capot extérieur 100, 110. Les ensembles capot-plaque de cuisson, appelés ci-après « plaques de cuisson » sont articulés par une charnière 5 entre une position d'écartement et une position de rapprochement dans laquelle les deux plaques superposées sont en contact avec les deux faces de l'aliment à cuire.

A la base du système d'automatisation prévu par l'invention, se trouve une minuterie 2, associée à ou comportant, selon les modes de réalisation, un organe déclencheur mécanique 3 ou électro-magnétique 300, 500. La minuterie, connue en elle-même, a un mode de fonctionnement mécanique, électromécanique ou électronique, selon l'organe déclencheur choisi.

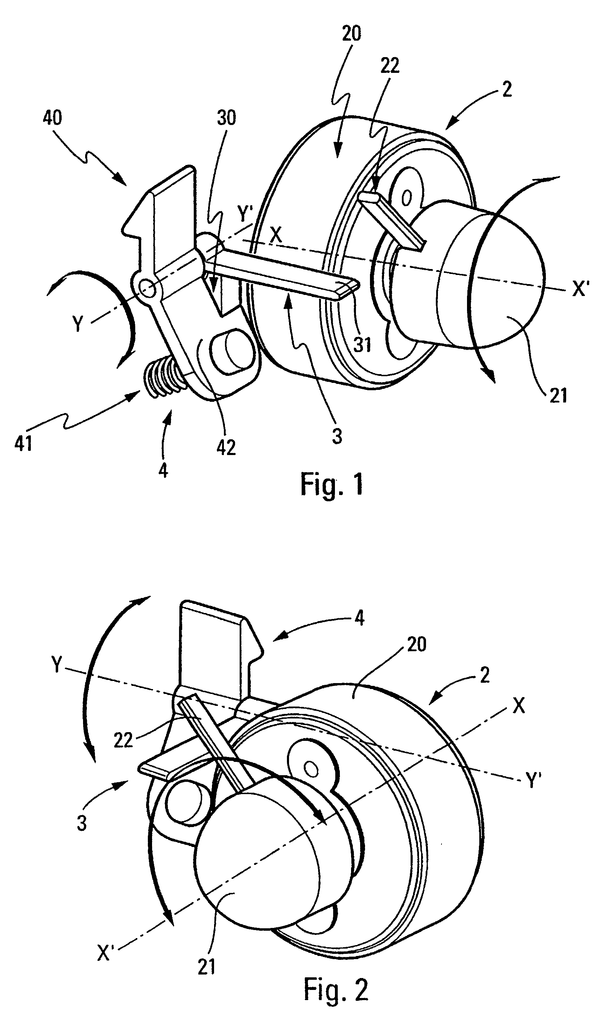

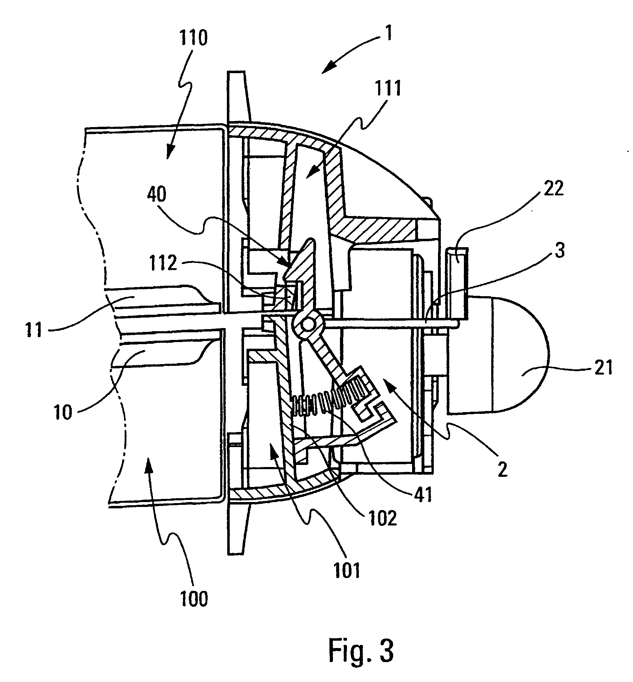

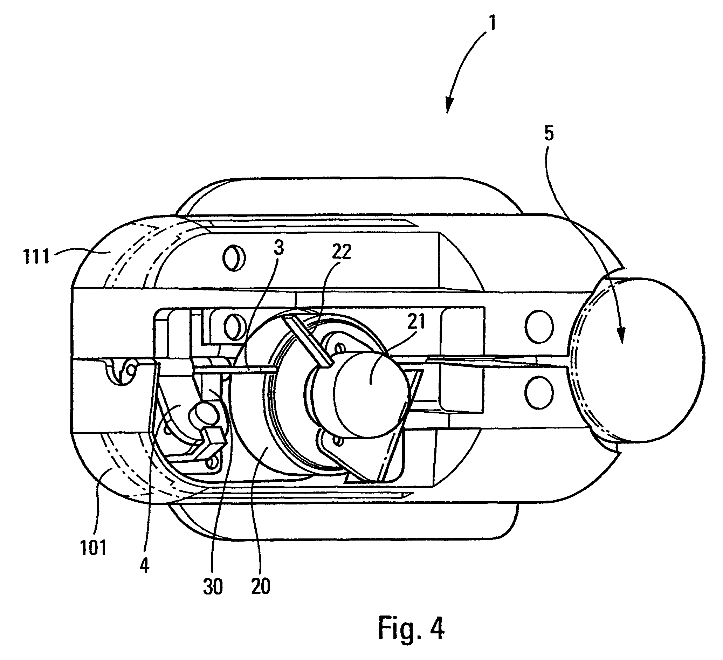

Dans le mode de réalisation des figures 1 à 4, la minuterie 2 comporte, logé pour l'essentiel dans une extrémité 101 du capot inférieur 100, un boîtier fixe 20 abritant les composants mécaniques ou électromécaniques, et traversé par un axe central X-X' sur lequel est monté un bouton rotatif 21 saillant sur une face latérale de l'extrémité de capot inférieur 101.

A la base du bouton 21 et saillant radialement sur sa paroi est monté un taquet 22, solidaire en rotation.

A proximité de la minuterie 2 est monté un verrou 4 formant crochet à une extrémité 40 et fixé à l'autre extrémité, par un ressort hélicoïdal de rappel 41, sur une cloison intérieure 102 de l'extrémité de capot inférieur 101.

Le verrou 4 est monté de manière à pouvoir pivoter autant que le permet le ressort 41 sur un axe Y-Y' sensiblement perpendiculaire à l'axe X-X' de rotation du bouton de minuterie 21.

Sur l'axe Y-Y' est monté également, contiguë au verrou 4, une tige 3 indépendante et libre en rotation, et comportant sur une face inférieure, à proximité de l'axe Y-Y', une butée en coin 30 susceptible de venir en contact avec la partie inférieure 42 du verrou 4 et d'exercer une pression à l'encontre du ressort de rappel 41. On observera qu'à cet effet, la partie 42 du verrou fixée par le ressort de rappel 41 est plus large que la partie 40 formant crochet, afin d'offrir une surface de contact à la butée 30.

La partie crochet 40 du verrou 4 vient en prise par encliquetage avec le bord d'une cloison intérieure 112 d'une extrémité 111 du capot supérieur 110, la cloison 112 s'étendant dans un plan parallèle à l'axe de pivotement Y-Y' du verrou 4, sensiblement dans le prolongement de la cloison 102 de l'extrémité de capot inférieur 101.

Complémentairement aux moyens de verrouillage, l'appareil 1 comporte, intégré à la charnière 5, un ressort de torsion à deux brins, l'un solidaire de la plaque inférieure 10, l'autre de la plaque supérieure 11, de manière à constituer un ressort de rappel de la plaque supérieure 11 en position d'écartement et assurer une large ouverture de l'appareil quand celui-ci n'est pas verrouillé. L'écartement des deux plaques est assez conséquent, lors de l'ouverture automatique de l'appareil, pour permettre une nette diminution de la température à l'intérieur de l'appareil et le retrait des aliments sans risque de brûlure pour l'utilisateur. Le mouvement d'écartement peut être amorti en intégrant à la charnière 5 un système composé de deux pièces en plastique ou élastomère, en frottement l'une sur l'autre.

On va maintenant décrire le fonctionnement de la minuterie combinée à ce système mécanique d'ouverture automatique.

Les deux plaques de cuisson 10, 11 étant superposées, leur face en contact avec l'aliment à cuire, et l'appareil fermé par encliquetage du verrou 4 de manière à solidariser les parois internes 102, 112 des deux extrémités de capot 101, 111, l'utilisateur tourne le bouton de minuterie 21 dans le sens des aiguilles d'une montre, en fonction de la durée de cuisson choisie pour l'aliment.

Le décompte du temps s'opère alors par rotation du bouton 21 dans le sens inverse de celui des aiguilles d'une montre, jusqu'à ce qu'en fin de course, le taquet 22 solidaire en rotation du bouton 21 entre en contact avec l'extrémité libre 31 de l'organe d'actionnement ou tige 3.

Celle-ci, entraînée dans un mouvement de rotation vers le bas, exerce une pression par l'intermédiaire de de la butée 30 sur la partie large 42 de l'organe de verrouillage 4, à l'encontre du ressort de rappel 41. Le verrou 4 pivote ainsi autour de son axe Y-Y', entraînant la libération du crochet 40.

Sous l'action du ressort de torsion intégré à la charnière 5, le capot supérieur 110 se soulève, entraînant l'écartement des deux plaques de cuisson et l'ouverture de l'appareil.

En fin de course, le taquet 22 est passé sous la tige 3, libérant ainsi le verrou 4 de la pression exercée par la butée 30. Sous l'action du ressort de rappel 41, le verrou 4 reprend ainsi sa position initiale.

Pour le cycle suivant, la fermeture se fait à nouveau manuellement. Le bouton de minuterie 21 peut être réarmé par une nouvelle rotation dans le sens des aiguilles d'une montre, car le taquet 22 situé sous la tige 3 soulève simplement celle-ci qui est libre en rotation, permettant au taquet 22 de passer par dessus.

Avantageusement, l'appareil comprend des moyens d'ouverture manuels accessibles sur une paroi extérieure. Ils peuvent être constitués par l'extrémité libre 31 de la tige 3, en saillie pour permettre à l'utilisateur de la pousser vers le bas pour agir sur le crochet 40 par l'intermédiaire de la butée 30. De préférence, l'extrémité de la tige est revêtue d'un bouton ou d'une manette.

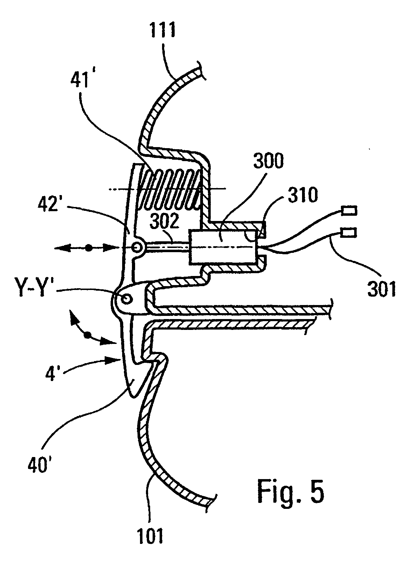

Dans un mode de réalisation alternatif schématisé à la figure 5, le verrou 4' est sensiblement identique au verrou 4 précédemment décrit, mais la partie 42' opposée au crochet 40' de l'autre côté de l'axe de pivotement Y-Y' n'a pas besoin d'être plus large. L'organe déclencheur est constitué par un vérin électromagnétique 300 placé dans un logement 310 de l'extrémité de capot supérieur 111, et dont la tige de piston 302 est reliée à la partie 42' de l'organe de verrouillage 4'.

A l'autre extrémité, le vérin électromagnétique 300 est connecté par des conducteurs électriques 301 à une minuterie de type électromécanique ou électronique (non représentée).

A la fin du temps sélectionné sur la minuterie, le piston du vérin électromagnétique recule dans son logement suivant un déplacement sensiblement perpendiculaire à l'axe de rotation Y-Y' de l'organe de verrouillage 4'. La partie 42' de l'organe de verrouillage, solidaire de la tige 302 du piston, entraîne alors le pivotement de l'organe de verrouillage à l'encontre du ressort de rappel 41', ce qui libère le crochet 40' et entraîne l'ouverture de l'appareil, ouverture sollicitée par le ressort de torsion de la charnière 5 comme dans le mode de réalisation décrit en relation avec les figures 1 à 4.

A titre de variante, le crochet 40' est ici représenté en prise avec une paroi de l'extrémité de capot inférieur 101, tandis que le ressort de rappel 41' est fixé sur une paroi de l'extrémité de capot supérieur 111.

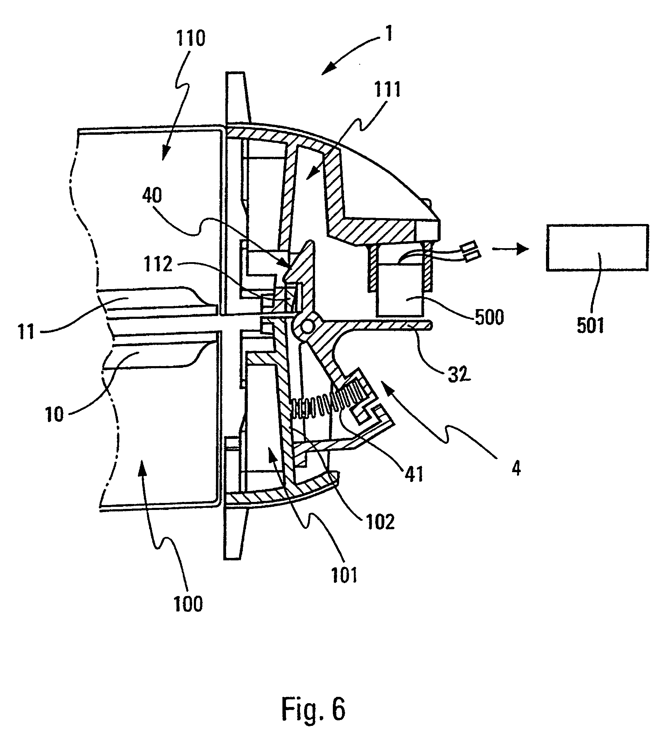

Dans la variante selon la figure 6, la minuterie mécanique est ici remplacée par une ventouse électromagnétique 500 commandée par une carte électronique 501. Celle-ci sert à verrouiller et déverrouiller le crochet 40 : lorsque le produit est fermé et que les aliments cuisent, la ventouse électromagnétique 500 maintient le crochet 40 fermé par l'intermédiaire de la tige 32 solidaire du crochet.

A la fin du temps de cuisson, la ventouse électromagnétique 500 n'est plus alimentée et le ressort d'ouverture (qui a un couple suffisant) déverrouille le crochet 40 ouvrant ainsi le produit.

Le ressort 41 lié au crochet, quant à lui, sert à remettre le crochet 4 dans la bonne position pour qu'au cycle suivant, la ventouse électromagnétique 500 puisse se mettre en action.

Ces quatre modes de réalisation sont des variantes d'un même système automatisant le temps de cuisson et l'ouverture de l'appareil par la combinaison judicieuse d'une minuterie et de moyens de verrouillage avantageusement intégrés au corps de l'appareil et associés à des moyens d'écartement des deux plaques. En choisissant le temps de cuisson, l'utilisateur sélectionne en réalité le temps de fermeture de l'appareil, la température de cuisson diminuant nettement dès l'ouverture de l'appareil.

Ce contrôle indirect du temps de cuisson s'accompagne de l'ouverture automatique de l'appareil pour pouvoir prélever l'aliment cuit en minimisant les risques de brûlure.

L'appareil est ainsi plus commode et confortable. Il permet d'obtenir une cuisson optimale des aliments. Enfin, il apporte une plus grande sécurité : si l'utilisateur oublie l'aliment dans l'appareil, il ne brûlera pas.

Bien entendu, l'invention n'est pas limitée aux modes de réalisation décrits et de nombreuses variantes peuvent être envisagées sans sortir du cadre de l'invention.

L'ensemble minuterie-verrou, incorporé dans les divers modes de réalisation décrits dans une extrémité latérale de l'appareil, pourrait également être disposé dans une extrémité frontale de celui-ci.

Les moyens de soulèvement automatique de la plaque supérieure pourraîent être constitués par un ressort à lame ou tout autre moyen équivalent connu, fixé latéralement dans l'appareil et non nécessairement dans la charnière.

Un avertisseur sonore et/ou lumineux peut être associé aux moyens d'ouverture automatique décrits.

## Revendications

1. Appareil électrique du type gaufrier comportant :
- deux plaques de cuisson (10,11) reliées par une charnière (5) permettant leur articulation entre une position d'écartement et une position de rapprochement permettant la superposition des deux plaques (10,11) entre lesquelles s'opère la cuisson de l'aliment ;
- des moyens de rappel de la plaque supérieure (11) en position d'écartement ;
- des moyens de verrouillage (4,4') intégrés au corps de l'appareil (1), comprenant un verrou mécanique (4,4') qui est muni d'un ressort de rappel (41, 41'), qui a la forme d'un crochet (40, 40') à une de ses extrémités, et qui pivots autour d'un axe (Y-Y') entre une position dans laquelle il est en prise et verrouille l'appareil en position de superposition des deux plaques (10,11), et une position dans laquelle il est libéré ; et
- un organe déclencheur mécanique (22,30) ou électromagnétique (300,500), solidaire d'une minuterie (2) ou commandé par elle, adapté à mettre le verrou (4,4') dans sa position libérés et à déclencher l'ouverture automatique de l'appareil,
**caractérisé en ce que** l'axe de pivotement (Y-Y') du verrou (4,4') est parallèle au bord ou à la paroi interne (112) du corps de l'appareil avec laquelle le crochet (40,40') est adapté à venir en prise, le ressort de rappel (41, 41') étant disposé à l'extrémité du verrou (4,4') opposée à celle où est situé le crochet (40, 40').

2. Appareil conforme à la revendication 1, **caractérisé en ce que** ledit verrou (4,4') coopère avec ledit bord ou ladite paroi interne (112) par encliquetage.

3. Appareil conforme à l'une des revendications 1 ou 2, **caractérisé en ce que** la minuterie (2) comporte une partie rotative (21) de décompte du temps et **en ce que** ledit déclencheur mécanique est un taquet (22) solidaire en rotation de ladite partie rotative (21) de la minuterie.

4. Appareil conforme à la revendication 3, **caractérisé en ce que** ledit verrou (4) pivote autour d'un axe (Y-Y') sensiblement perpendiculaire à l'axe de rotation (x-x') dudit taquet (22), l'axe de pivotement dudit verrou (4) étant aussi l'axe de rotation d'une tige indépendante (3) comportant une butée (30), la rotation du taquet (22) en fin de course entraînant la rotation de la tige (3) et la pression de la butée (30) sur le verrou (4) à l'encontre dudit ressort de rappel (41) pour déverrouiller l'appareil.

5. Appareil conforme à la revendication 4, **caractérisé en ce qu'**il comprend des moyens extérieurs d'ouverture manuelle constitués par l'extrémité libre (31) de ladite tige (3) à butée ou solidaires de celle-ci (3).

6. Appareil conforme à l'une des revendications 1 à 5, **caractérisé en ce que** les moyens de rappel de la plaque supérieure (11) en position d'écartement comprennent un ressort de torsion à deux brins intégré à la charnière (5), l'un des brins étant solidaire de la plaque supérieure (11) et l'autre brin solidaire de la plaque inférieure (10).

## Claims

1. Electrical appliance of the waffle iron type comprising:
- two hot plates (10, 11) connected by a hinge (5) allowing them to be articulated between a separated position and a close-together position allowing the two plates (10, 11) between which the food is cooked to be superposed;
- means of returning the top plate (11) to the separated position;
- locking means (4, 4') built into the body of the appliance (1), comprising a mechanical latch (4, 4') which is equipped with a return spring (41, 41'), which has the shape of a hook (40, 40') at one of its ends, and which pivots about an axis (Y-Y') between a position in which it is engaged and locks the appliance in the position in which the two plates (10, 11) are superposed, and a position in which it is released; and
- a mechanical (22, 30) or electromagnetic (300, 500) release member secured to a timer (2) or controlled by it, designed to place the latch (4, 4') in its released position and to trigger automatic opening of the appliance;
**characterized in that** the axis (Y-Y') of pivoting of the latch (4, 4') is parallel to the edge or to the internal wall (112) of the body of the appliance with which the hook (40, 40') is designed to engage, the return spring (41, 41') being arranged at the opposite end of the latch (4, 4') to the end at which the hook (40, 40') is situated.

2. Appliance according to Claim 1, **characterized in that** the said latch (4, 4') collaborates with the said edge or the said internal wall (112) by clip-fastening.

3. Appliance according to either of Claims 1 and 2, **characterized in that** the timer (2) comprises a rotary part (21) for counting down the time and **in that** the said mechanical release device is a pawl (22) that rotates as one with the said rotary part (21) of the timer.

4. Appliance according to Claim 3, **characterized in that** the said latch (4) pivots about an axis (Y-Y') roughly perpendicular to the axis of rotation (X-X') of the said pawl (22), the axis of pivoting of the said latch (4) also being the axis of rotation of an independent rod (3) comprising a stop (30), rotation of the pawl (22) at the end of its travel leading to rotation of the rod (3) and the pressing of the stop (30) against the latch (4) against the action of said return spring (41) to unlock the appliance.

5. Appliance according to Claim 4, **characterized in that** it comprises external manual-opening means consisting of the free end (31) of the said rod (3) with a stop, or secured to this rod (3).

6. Appliance according to one of Claims 1 to 5, **characterized in that** the means of returning the top plate (11) to the separated position comprise a two-strand torsion spring built into the hinge (5), one of the strands being secured to the top plate (11) and the other strand secured to the bottom plate (10).

## Patentansprüche

1. Elektrische Vorrichtung vom Typ eines Waffeleisen, mit:
- zwei Backplatten (10, 11), die über ein Gelenk (5) miteinander verbunden sind, das deren Schwenkung zwischen einer Spreizposition und einer Annäherungsposition erlaubt, was die gegenseitige Überlagerung der beiden Platten (10, 11) erlaubt, zwischen denen der Backvorgang der Speise erfolgt;
- Mitteln zum Zurückholen der oberen Platte (11) in die Spreizposition;
- Verriegelungsmittel (4, 4'), die an dem Körper der Vorrichtung (1) integriert sind, mit einem mechanischen Riegel (4, 4'), der mit einer Rückholfeder (41, 41') versehen ist, der an einem seiner Enden die Form eines Hakens (40, 40') hat und der um eine Achse (Y-Y') zwischen einer Position, in welcher er sich in einem Eingriff befindet und die Vorrichtung in der Überlagerungsposition der beiden Platten (10, 11) verriegelt, und einer Position, in welcher er befreit ist, und
- einem mechanischen (22, 30) oder elektromechanischen (300, 500) Auslöseglied, das fest mit einem Minutenwerk (2) verbunden ist oder durch dieses gesteuert wird und so ausgebildet ist, dass es den Riegel (4, 4') in seine befreite Position bringt und die Öffnung der Vorrichtung automatisch auslöst,
**dadurch gekennzeichnet, dass** die Schwenkachse (Y-Y') des Riegels (4, 4') parallel zu dem Rand oder der Innenwand (112) des Körpers der Vorrichtung ist, mit welcher der Haken (40, 40') für einen Eingriff ausgebildet ist, wobei die Rückholfeder (41, 41') an dem Ende des Riegels (4, 4') angeordnet ist, das demjenigen entgegengesetzt ist, an welchem der Haken liegt (40, 40').

2. Vorrichtung nach Anspruch 1, **dadurch gekennzeichnet, dass** der Riegel (4, 4') mit dem Rand oder der Innenwand (112) durch Verklinkung zusammenwirkt.

3. Vorrichtung nach einem der Ansprüche 1 oder 2, **dadurch gekennzeichnet, dass** das Minutenwerk (2) ein Drehteil (21) zum Herunterzählen der Zeit aufweist und dass der mechanische Auslöser ein Mitnehmer (22) ist, der mit dem Drehteil (21) des Minutenwerks drehfest verbunden ist.

4. Vorrichtung nach Anspruch 3, **dadurch gekennzeichnet dass** der Riegel (4) um eine Achse (Y-Y') schwenkt, die im wesentlichen rechtwinklig zu der Drehachse (X-X') des Mitnehmers (22) ist, wobei die Schwenkachse des Riegels (4) auch die Drehachse eines unabhängigen Steges (3) mit einem Anschlag (30) ist, wobei die Drehung des Mitnehmers (22) am Ende des Verlaufs die Drehung des Steges (3) und den Druck des Anschlags (30) auf den Riegel (4) gegen die Rückholfeder (41) antreibt, um die Vorrichtung zu entriegeln.

5. Vorrichtung nach Anspruch 4, **dadurch gekennzeichnet, dass** diese manuelle äußere Öffnungsmittel aufweist, die durch ein freies Ende (31) des Steges (3) gebildet werden und die an diesem (3) angeschlagen oder mit diesem fest verbunden sind.

6. Vorrichtung nach einem der Ansprüche 1 bis 4, **dadurch gekennzeichnet, dass** das Mittel zum Zurückholen der oberen Platte (11) in die gespreizte Position eine Schraubenfeder mit zwei Strängen aufweist, die in das Gelenk (5) integriert sind, wobei einer der Stränge fest mit der oberen Platte (11) verbunden ist und der andere Strang fest mit der unteren Platte (10) verbunden ist.
